# EUROPEAN PATENT APPLICATION

(11) **EP 1 447 682 A1**
(43) Date of publication of application: **18.08.2004**
(21) Application number: 04075312.1
(22) Date of filing: 02.02.2004
(51) Int. Cl.: G01T 1/20, G01T 1/29

(54) **Prism use for CR collector efficiency boost**

(30) Priority: 13.02.2003 US 366143
(71) Applicant: EASTMAN KODAK COMPANY, Rochester, New York 14650 (US)
(72) Inventor: Boutet, John C., Eastman Kodak Company, Rochester New York 14650-2201 (US); Kircher, James R., Eastman Kodak Company, Rochester New York 14650-2201 (US); Muir, Christopher M., Eastman Kodak Company, Rochester New York 14650-2201 (US)
(74) Representative: Haile, Helen Cynthia

(57) **Abstract**

A light collector and detector apparatus comprising: a light detector having a light detecting face; a light collector for collecting light emitted from, reflected from and transmitted through a scanned medium and for directing collected light to the light detector; and an optical assembly mounted on the detector face for directing light into the detector to improve light collection efficiency.

## Description

This invention relates in general to an apparatus for reading out the image stored in a photostimulable phosphor image recording medium. More particularly, this invention relates to apparatus for collecting and detecting the radiation emitted from the photostimulable phosphor in response to interrogation by stimulating radiation wherein flare is minimized.

In standard medical x-rays a sheet of film is placed in contact with one or two phosphor sheets. The x-rays cause the phosphor to flouresce, thereby exposing the film. With this method it is critical to insure appropriate exposure for the desired film density. For wider exposure latitude computed radiography (CR) utilizes a storage phosphor material, as described in U.S. Patent no. RE 31,847, re-issued March 12, 1985, inventor Luckey. Part of the absorbed x-ray energy in a storage phosphor causes instantaneous fluorescence, but a significant part is stored in the phosphor and is not emitted as light until this type of media is discharged. The media is discharged by scanning with a relatively long wavelength beam of stimulating radiation, such as red or infrared light. The red stimulating light excites the phosphor causing the release of stored energy as short wavelength blue or violet emitted light. The amount of short wavelength emitted light from each pixel area of the phosphor surface is measured and represents the quantity of x-ray exposure, if the red stimulating energy is constant and illuminating only the pixel being read. Most of the red stimulating light diffusely reflects off the phosphor surface and must be prevented from reimpinging elsewhere on the phosphor where it could discharge energy as blue "flare" light from areas other than the pixel being read. That red light must also be prevented from reaching the light detector, which is typically a PMT. A blue filter is used in front of the PMT to block out the red light. To optimize the signal-to-noise ratio of the imaging system, it is desirable to collect as much of the emitted light as possible and to direct it to the photodetector.

U.S. Patent no. 5,134,290, issued by John Boutet, Bruce Whiting and Michael Brandt describe pyramidal mirror collectors which position a single mirror centrally in a collector design. Copending U.S. Patent Application, USSN 10/366,999, filed February 14, 2003, (docket no. 85596), describes a collector which uses two pyramidal mirror chambers, each with a near central PMT, to provide an efficient collector (for light emitted from a storage phosphor. In these types of collectors, some emitted light rays are reflected off the mirrors in the pyramidal mirror chambers and pass in front of the blue filter without being detected by the PMT. Some other emitted light rays strike the filter at such a shallow angle that most of the energy is reflected back into the mirror chamber without being detected.

According to the present invention, there is provided a solution to the problems of the prior art.

According to a feature of the present invention, there is provided a light collector and detector apparatus comprising: a light detector having a light detecting face; a light collector for collecting light emitted from, reflected from and transmitted through a scanned medium and for directing collected light to said light detector; and an optical assembly mounted on said detector face for directing light into said detector to improve light collection efficiency.

The invention has the following advantages.
1. Efficiency is increased for the collection and detection of light from a scanned medium.
2. Light collection is increased in a simple and cost effective manner.

Figs. 1A-1D are diagrammatic views of exemplary CA collector apparatus incorporating the present invention.
Fig. 2 is an edge view useful in explaining the present invention.
Fig. 3 is another edge view useful in explaining the invention.
Figs. 4A-4C are respective perspective and two elevational views of the embodiment of Figs. 1A-1D.
Figs. 5 and 6 are diagrammatic views of the invention of Figs. 1A-1D.

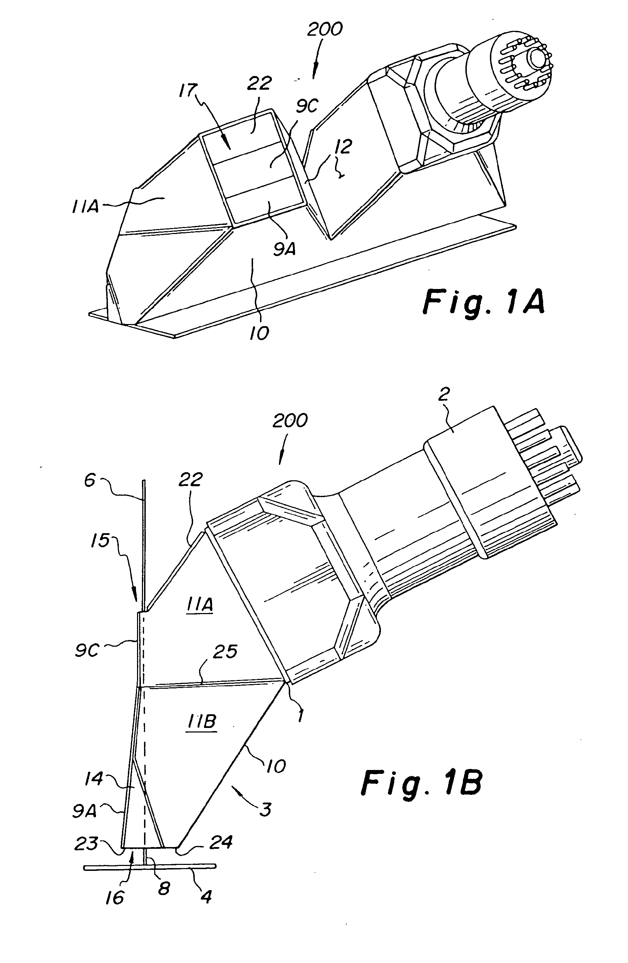

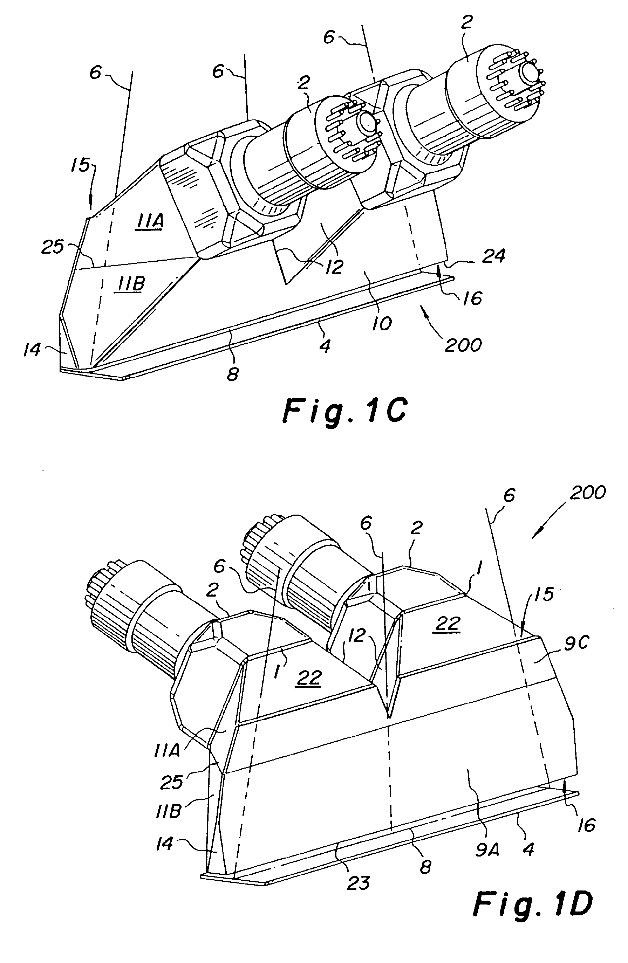

Referring now to Figs. 1A-1D, there is shown an apparatus (200) incorporating an embodiment of the present invention. As shown, a blue filter (1) is cemented on light detector PMT (Photo Multiplier Tube) (2) and two such PMT-filter assemblies are attached to the pyramidal mirror chambers (3) to collect light emitted by phosphor (4) as it is scanned by red laser light beam (6) along scan line (8). The pyramidal mirrors chambers (3) are bounded by normal mirror, bottom (9A), normal mirror, top (9C), bottom mirror (10), two top outer filter mirrors (11A), two top outer side mirrors (11B), two top inner mirrors (12), two end mirrors (14), beam entrance slot (15), bottom collection aperture (16), two PMT filter apertures (17) which admits light to PMT filters (1), and top slot mirrors (22). The laser beam (6) passes through the pyramidal mirror chambers to the phosphor (4) by means of passage provided by top beam entrance slot (15) and the bottom collection aperture (16). The left and right pyramidal chambers are joined in the middle of the collector by a split triangular passage defined by the abutting edges of top inner mirrors (12), normal mirror (9A), and the bottom mirror (10), and split by the beam entrance slot (15), and the collection aperture (16). The beam entrance slot (15) is defined by normal mirror, top (9C) on one side and edges of top slot mirrors (22) and top inner mirrors (12) on the other, with the ends of the slot (15) bounded by the two top outer filter mirrors (11A). The collection aperture (16) is bounded by entrance aperture edge (23) and (24) of normal mirror (9A) on one side and bottom mirror (10) on the opposite side respectively. The ends of the collection aperture (16) are defined by end mirrors (14). The collection aperture (16) lets blue light emitted from the phosphor (4) and red light, from laser light beam (6) reflected from the phosphor (4), enter the pyramidal mirrors chambers (3) which directs the light to the two PMT filter apertures (17).

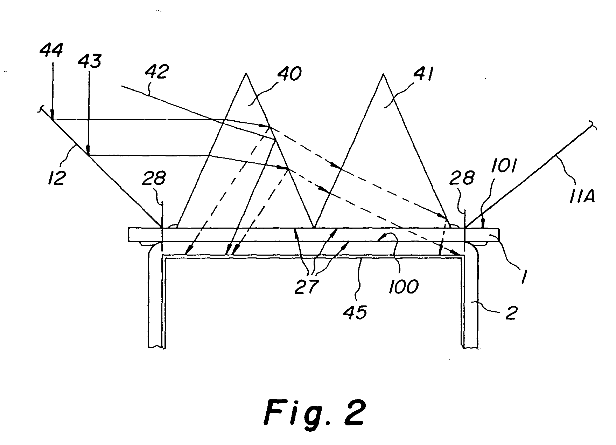

In a collector such as shown in Figs. 1A-1D some rays are reflected across the space in front of PMT (2) without striking and entering. Figure 2 shows an edge view of the face 100 of a PMT (2) with mirrors (11A) and (12) contacting the filter at the edge of PMT active area (28). By placing an optical assembly such as Prism (40) and Prism (41) over the active area of the PMT (2) on the face 101 of the PMT filter (1) some rays which would miss the PMT (2), such as rays (42), (43) and (44), can be intercepted and directed to the PMT (2). For a 3" square PMT's for example, best results are obtained if two roof prisms are used on each PMT (2) with the prism roof crests oriented at 90 degrees to the scan line, and with one end of each prism trimmed to be nearly parallel to the "top slot mirror". The addition of double prisms to the PMT filters of this collector design can add 3 to 5% collection efficiency to the collector depending on the prism design. The greatest gain is provided if the prism faces not contacting the filter are AR coated and the filter is not AR coated. For this ray capture technique to work properly the prisms (40) and (41), the PMT filter (1) and the PMT (2) must me optically coupled such as by using optical cement (27) to cement their faces together. This optical coupling is necessary because the prisms allow rays to reach the prism/filter interfaces and the filter/PMT interfaces at angles that exceed the critical angle. This is well illustrated by ray (43) part of which emerges from prism (40) and enters prism (41) passing through the filter and reaching the PMT photocathode (45) at approximately 65 degrees from normal. Because the photocathode (45) is close to the same index of refraction as the PMT glass face (100) the ray (43) enters the photocathode (45) where much of its energy is detected. If the prisms (40), (41) were not cemented to the filter or if the filter were not cemented to the PMT, the ray (43) would experience total internal reflection at the glass air interface and not reach the photocathode (45). The portion of the ray (43) that is not converted as it traverses the photocathode obliquely in the glass/vacuum direction is totally internally reflected and traverses the photocathode again in the vacuum/glass direction producing additional signal.

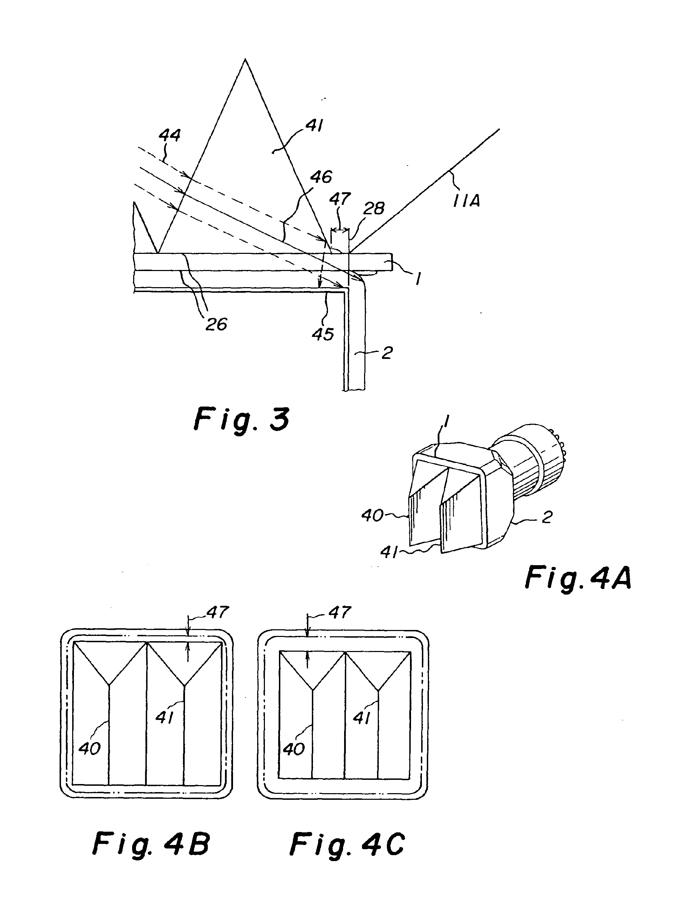

As Figure 3 demonstrates, some oblique rays can escape through the edges of the PMT filter (1) or PMT (2) without reaching the photocathode (45) active area of the PMT (2). While this is also true without prisms (40), (41), the prisms permit rays to reach the edges of the active PMT area (28) at more oblique angles that are past the critical angle relative to the filter normal. This effect opposes the efficiency boost obtained by intercepting rays as shown in Figure 2 and directing them to the PMT (2). To optimize the efficiency boost the prism yields, the proper margin (47) between the edges of the active PMT area (28) and the base of prism (41) must be determined. This is a function of the collector and prism geometry and will be somewhat different on all four sides of the PMT face.

Figure 4A shows the prisms (40) and (41) mounted to the PMT filter (1). Two face views of the PMT filter (1) with different size prisms providing two different width margins (47) are also shown in Figures 4B and 4C, respectively. The best efficiency would be obtained if the margin surface were free of excess optical cement and the filter glass in the margin area AR (Anti-Reflectance) coated, but if the assembly process is likely to leave a film of optical cement over a significant portion of the margin AR coating, it is best to not AR coat the filter margin at all.

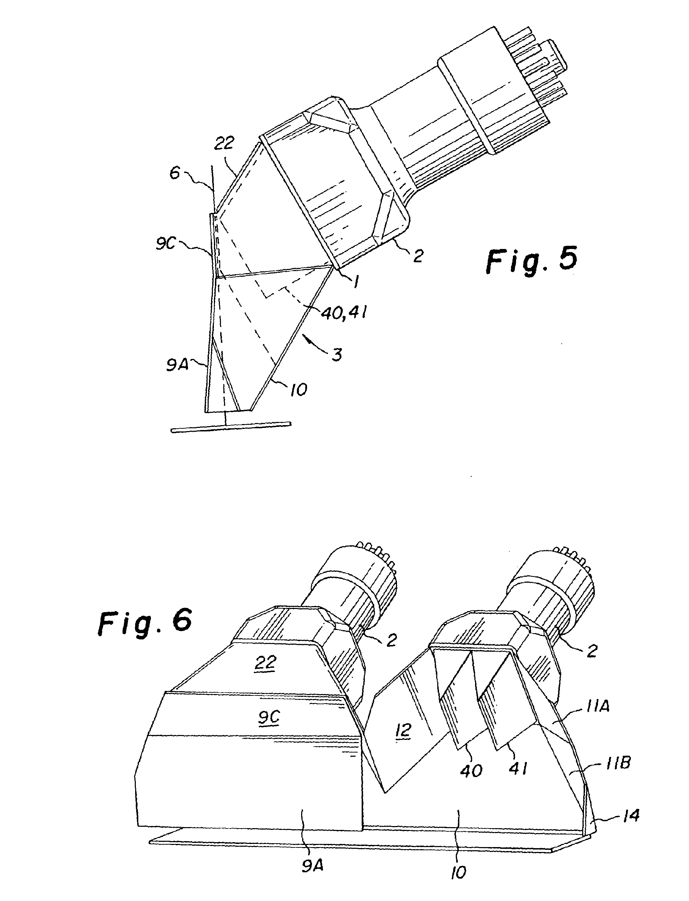

Figure 5 shows a side view of the wide mouth collector of Figs. 1A-1D with the side profile in dashed lines of prisms (40) and (41) inside. The top end of the prisms are trimmed parallel to top slot mirrors (22) and the bottom ends are trimmed normal to the filter face for easy insertion into pyramidal mirror chamber (3).

Figure 6 is a cut-away view of the collector showing a two prism per PMT design with one of the two PMT/Prism assemblies exposed.

Collection efficiency of such rays can be improved by cementing one or more prisms to the face of the blue filter that is cemented to the PMT with index matching optical cement. These prisms provide an improvement in collection if they protrude into the space in front of the PMT so as to intersect rays passing in front to the filter and redirect them toward the PMT emitter coating. The greatest gain is provided if the prisms are AR coated. For the 3" square PMT's used in the "Improved 2 PMT Collector Design for Computed Radiography" best results are obtained if two roof prisms are used on each PMT with the prism roof crests oriented at 90 degrees to the scan line, and with one end of each prism trimmed to be nearly parallel to the "top slot mirror". The prisms should be as tall as practical without interfering with the scanning beam. Prisms that are about 1.5" tall work well. A small margin should be present between the sides of the prism covered area on the filter and the edges of the projected active area of the PMT on the filter face to reduce losses through the edges of the PMT filter and PMT face plate. Materials used for the prism and cement must not fluoresce at a wavelength that passes the blue filter, and must have low absorption in the 350 to 450nm wavelength range. A collection efficiency boost of 3% to 5% can be achieved with prisms in this type of collector.

For example, more or less than two prisms can be used and other optical assemblies accomplishing the same functions can be used instead of prisms. Moreover, other light detectors than PMT's can be used such as solid state photodetectors. Collectors of other configuration than that described can be used and light emitted by reflected from or transmitted through a medium can be collected and detected.

## Claims

1. A light collector and detector apparatus comprising:
a light detector having a light detecting face;
a light collector for collecting light emitted from, reflected from and transmitted through a scanned medium and for directing collected light to said light detector; and
an optical assembly mounted on said detector face for directing light into said detector to improve light collection efficiency.

2. The apparatus of claim 1 wherein said optical assembly includes a prism assembly mounted on said detector face for directing light intercepted by said prism into said detector face.

3. The apparatus of claim 1 wherein said optical assembly includes two prisms mounted side by side on said detector face.

4. The apparatus of claim 3 wherein said two prisms are dimensioned to substantially cover the face of said detector with appropriate clear margins between the bases of said prisms and detector active area to optimize collection efficiency.

5. The apparatus of claim 1 wherein said optical assembly is cemented to said detection face with optical cement.

6. The apparatus of claim 1 wherein said scanned medium is a storage phosphor which is scanned with stimulating light of a first frequency range and said storage phosphor emits light in a second frequency range; and
wherein said light detector face has a filter which passes said emitted light but rejects said stimulating light.

7. The apparatus of claim 2 wherein said prism assembly has light interception prism faces which are coated with an antireflection coating.

8. The apparatus of claim 3 wherein said two prisms have light interception faces which are coated with an antireflection coating.

9. The apparatus of claim 3 wherein said scanned medium is scanned with a light beam and said prisms are oriented at substantially 90 degrees to the scan line direction.
